# EUROPEAN PATENT APPLICATION

(11) **EP 4 759 872 A1**
(43) Date of publication of application: **17.06.2026**
(21) Application number: 25221088.5
(22) Date of filing: 05.12.2025
(51) Int. Cl.: C08L 9/06, C08L 9/00, C08K 3/36, B60C 1/00, C08L 45/00

(54) **RUBBER COMPOSITIONS AND ARTICLES THEREOF**

(30) Priority: 12.12.2024 US 202418978434
(71) Applicant: The Goodyear Tire & Rubber Company, Akron, OH 44316 (US)
(72) Inventor: OCAMPO, Fabien, F-57100 Thionville (FR); JACOBY, Claude Charles, L-6615 Wasserbillig (LU)
(74) Representative: Kutsch, Bernd

(57) **Abstract**

An uncured rubber composition is disclosed comprising 40 phr to 70 phr of a styrene butadiene elastomer; 25 phr to 55 phr of a polybutadiene elastomer; 70 phr to 110 phr silica; and 25 phr to 55 phr of a plasticizer. The rubber composition may be used as a vulcanized rubber composition in a tire.

## Description

### BACKGROUND

The demand for improved tire performance has resulted in the development and evaluation of new materials that have desired properties such treadwear performance, rolling resistance, snow performance, wet performance, dry performance, and chip and flake resistance. In tire elastomer compositions, improving treadwear performance and rolling resistance usually comes at the cost of reducing the performance in other areas. There is a need for elastomer compositions for tires that can provide improvement in treadwear performance and rolling resistance while maintaining acceptable performance in other properties.

### SUMMARY OF THE INVENTION

The invention relates to a rubber composition in accordance with claim 1, to a vulcanized rubber composition in accordance with claim 13 and to an article in accordance with claim 14.

Dependent claims refer to preferred embodiments of the invention.

In accordance with the purpose(s) of the present invention, as embodied and broadly described herein, are vulcanized rubber compositions is provided with improved physical properties such as, for example, treadwear, rolling resistance, snow performance, chip and flake, and dry performance.

In a preferred aspect, the present invention provides for an uncured rubber composition that includes a styrene butadiene elastomer, a cis 1,4-polybutadiene elastomer, silica, and a plasticizer. The uncured rubber compositions can be vulcanized to produce a variety of components used in the production of tires.

### DETAILED DESCRIPTION OF PREFERRED EMBODIMENTS OF THE INVENTION

### Definitions

As used herein, the term "phr" refers to parts by weight of a respective material per 100 parts by weight of rubber or elastomer. In general, using this convention, an elastomer composition is comprised of 100 parts by weight of rubber/elastomer. The claimed composition may comprise other rubbers/elastomers than explicitly mentioned in the claims, provided that the phr value of the claimed rubbers elastomers is in accordance with claimed phr ranges and the amount of all rubbers/elastomers in the composition results in total in 100 parts of rubber.

The terms "rubber" and "elastomer" may be used herein interchangeably, unless indicated otherwise.

As used herein, the "glass transition temperature" or "T_{g}", of an elastomer or rubber represents the glass transition temperature(s) of the respective elastomer or rubber in its uncured state or, in the case of an elastomer composition, in some aspects, T_{g} can be measured in a cured state. T_{g} is determined as a peak midpoint by a differential scanning calorimeter (DSC) using as test standard ASTM D7426 or equivalent.

As used herein, the term "uncured composition" refers to a composition including at least one natural or synthetic rubber component and, optionally, one or more fillers, processing aids, or additional ingredients, that has not been vulcanized. Uncured rubber is sensitive to changes in temperature and has a tendency to undergo "cold flow" (slow movement or deformation under stress) over time. In some aspects, the uncured rubber composition is a masterbatch.

As used herein, the term "vulcanized rubber composition" refers to a rubber composition obtained by taking an uncured composition as described herein and curing or vulcanizing it, often accomplished using sulfur compounds and/or other curing additives and in the presence of heat. Vulcanized or cured rubber does not undergo cold flow and is less sensitive to changes in temperature relative to uncured rubber. In another aspect, rubber compositions can be cured in molds in order to form finished articles including, but not limited to, tires.

Unless otherwise specified, pressures referred to herein are based on atmospheric pressure (i.e. one atmosphere).

### Rubber Compositions and Articles Thereof

The present invention provides for uncured rubber compositions, methods of making uncured rubber compositions, vulcanized rubber compositions, methods of making vulcanized rubber composition, articles (e.g., tires, components of tires) including the vulcanized rubber composition, and the like. The present invention provides for materials that can be used in articles such as tires to improve treadwear while maintaining or exceeding standards in rolling resistance, snow performance, dry performance, and chip and flake resistance, also meeting material costs goals.

In one embodiment, the present invention provides for an uncured rubber composition that includes a styrene butadiene elastomer, a polybutadiene elastomer, silica, and a plasticizer.

In one embodiment, the styrene butadiene elastomer can include 5% to 15% or bound styrene and a 30% to 40% or 35% vinyl content based upon the total elastomer.

In a preferred embodiment, the styrene butadiene elastomer is a solution polymerized styrene-butadiene rubber (sSBR).

In one embodiment, the sSBR can be conveniently prepared by using a catalyst (e.g., organolithium catalysis) in the presence of a hydrocarbon solvent.

In another embodiment, the styrene butadiene elastomer is a tin-coupled polymer. In still another embodiment, the SSBR is functionalized, as e.g. for improved compatibility with the silica. For example, the SSBR is functionalized with a hydroxyl group, amino group, or thiol group. In other embodiments, the styrene butadiene elastomer is not functionalized.

In one embodiment, 40 phr to 70 phr of the relatively low T_{g} styrene butadiene elastomer is present in the uncured composition.

In another embodiment, the styrene butadiene elastomer is present in the uncured composition in an amount of 40 phr, 45 phr, 50 phr, 55 phr, 60 phr, 65 phr, or 70 phr, where any value can be a lower and upper endpoint of a range (e.g., 50 phr to 65 phr).

In another embodiment, the relatively low T_{g} styrene butadiene elastomer has a T_{g} of -55 °C to -65 °C, -57 °C to -61 °C, or -59 °C.

In a preferred embodiment, the polybutadiene elastomer is cis 1,4-polybutadiene elastomer (BR or PBD). Cis 1,4-polybutadiene rubber may be prepared, for example, by organic solution polymerization of 1,3-butadiene.

The cis 1,4-polybutadiene elastomer has at least 90%, at least 95%, or 96% cis 1,4-content.

In a preferred embodiment, the cis 1,4-polybutadiene elastomer has a T_{g} in a range of from -90 °C to -110 °C, -100 °C to -110 °C, or -106 °C.

Suitable polybutadiene rubbers are available commercially, such as Budene^{®} 1207, Budene^{®} 1208, or Budene^{®} 1223 high cis-1,4-polybutadiene rubber from The Goodyear Tire & Rubber Company.

In one embodiment, 25 phr to 55 phr of the polybutadiene elastomer is present in the uncured composition. In another embodiment, the polybutadiene elastomer is present in the uncured composition in an amount of 25 phr, 30 phr, 35 phr, 40 phr, 45 phr, 50 phr, or 55 phr, where any value can be a lower and upper endpoint of a range (e.g., 50 phr to 60 phr). In another embodiment, the weight ratio of the styrene butadiene elastomer to the polybutadiene elastomer is 1:1 to 1.5:1.

In one embodiment, the uncured composition includes 70 phr to 110 phr silica. In another embodiment, the silica is present in the uncured composition in an amount of 70 phr, 75 phr, 80 phr, 85 phr, 90 phr, 95 phr, 100 phr, 105 phr, of 110 phr where any value can be a lower and upper endpoint of a range (e.g., 80 phr to 100 phr).

In one embodiment, the silica can be obtained by the acidification of a soluble silicate, e.g., sodium silicate. In one embodiment, the uncured composition includes 85 to 95 phr or 90 phr of the precipitated silica.

Conventional silicas is characterized by a Brunauer-Emmett-Teller (BET) surface area, as measured using nitrogen gas. The BET method of measuring surface area is described in the Journal of the American Chemical Society, Volume 60, Page 304 (1930).

In a preferred aspect, the BET surface area is in the range of 150 m²/g to 165 m²/g or 160 m²/g.

In one embodiment, the conventional silica has an average ultimate particle size in the range of 0.01 µm to 0.05 µm as determined by an electron microscope. In other embodiments, the silica particles are smaller than 0.01 µm. In other aspects, the silica particles are larger than 0.05 µm.

Exemplary untreated precipitated silicas are available from PPG Industries as Hi-Sil^{™}, e.g., under the designations 210, 243, 315, EZ 160G-D, EZ 150G, 190G, 200G-D, HDP-320G, and 255CG-D; from Solvay as Zeosil^{™}, under the designations 115GR, 125GR, 165GR, 175GR, 185GR, 195GR, 1085GR, 1165MP, 1115MP, HRS 1200MP, Premium MP, Premium 200MP, and 195HR; from Evonik as Ultrasil^{™}, under the designations VN2, VN3, VN3GR, 5000GR, 7000GR, 9000GR, as Zeopol^{™}, under the designations 8755LS and 8745; from Wuxi Quechen Silicon Chemical Co., Ltd. as Newsil^{™}, under the designations 115GR and 2000MP; from Maruo Calcium Co., Ltd., as Tokusil^{™} 315, and silicas derived from rice husk ash from Yihai Food and Oil Industry, China. Any precipitated silica can be used. In other embodiments, the untreated precipitated silica is prepared as a wet filtered material shortly before use.

In another embodiment, the silica may be pre-hydrophobated (or pre-silanized) precipitated silica. By pre-hydrophobated, it is meant that the silica is pretreated, i.e., the pre-hydrophobated precipitated silica is hydrophobated prior to its addition to the rubber composition by treatment with at least one silane. Suitable silanes include but are not limited to alkylsilanes, alkoxysilanes, organoalkoxysilyl polysulfides and organomercaptoalkoxysilanes. In an alternative embodiment, the pre-hydrophobated precipitated silica may be pre-treated with a silica coupling agent comprised of, for example, an alkoxyorganomercaptoalkoxysilane or combination of alkoxysilane and organomercaptoalkoxysilane prior to blending the pre-treated silica with the rubber instead of reacting the precipitated silica with the silica coupling agent in situ within the rubber. For example, see U.S. Pat. No. 7,214,731. The pre-hydrophobated precipitated silica may optionally be treated with a silica dispersing aid. Such silica dispersing aids may include glycols such as fatty acids, diethylene glycols, polyethylene glycols, fatty acid esters of hydrogenated or non-hydrogenated C5 or C6 sugars, and polyoxyethylene derivatives of fatty acid esters of hydrogenated or non-hydrogenated C5 or C6 sugars. Exemplary fatty acids include stearic acid, palmitic acid and oleic acid. Exemplary fatty acid esters of hydrogenated and non-hydrogenated C5 and C6 sugars (e.g., sorbose, mannose, and arabinose) include, but are not limited to, the sorbitan oleates, such as sorbitan monooleate, dioleate, trioleate and sesquioleate, as well as sorbitan esters of laurate, palmitate and stearate fatty acids. Exemplary polyoxyethylene derivatives of fatty acid esters of hydrogenated and non-hydrogenated C5 and C6 sugars include polysorbates and polyoxyethylene sorbitan esters, which are analogous to the fatty acid esters of hydrogenated and non-hydrogenated sugars noted above except that ethylene oxide groups are placed on each of the hydroxyl groups. Optional silica dispersing aids if used are present in an amount ranging from 0.1% to 25% by weight based on the weight of the silica, with 0.5% to 20% by weight being suitable, and 1% to 15% by weight based on the weight of the silica also being suitable. For various pre-treated precipitated silicas see, for example, U.S. Pat. Nos. 4,704,414, 6,123,762, and 6,573,324.

In one embodiment, the uncured composition includes one or more plasticizers. In one embodiment, the amount of plasticizer present in the uncured composition is from 25 phr to 55 phr. In another embodiment, the plasticizer is present in the uncured composition in an amount of 25 phr, 30 phr, 35 phr, 40 phr, 45 phr, 50 phr or 55 phr where any value can be a lower and upper endpoint of a range (e.g., 35 phr to 40 phr).

In one embodiment, the plasticizer is a hydrocarbon resin having a T_{g} greater than 30 °C, preferably greater than 50 °C, and more preferably greater than 60 °C and less than 100 °C, such as hydrocarbon resins described in "Hydrocarbon Resins" by R. Mildenberger, M. Zander and G. Collin (New York , VCH, 1997, ISBN-3-527-28617-9). Representative hydrocarbon resins include for instance coumarone-indene-resins, petroleum resins, terpene resins, alphamethyl styrene resins and mixtures thereof.

Coumarone-indene resins are commercially available in many forms with melting points ranging from 10 °C to 160 °C, preferably from 30 °C to 100 °C as measured by the ball- and-ring method). Various analysis indicate that such resins are largely polyindene; however, typically contain random polymeric units derived from methyl indene, coumarone, methyl coumarone, styrene and methyl styrene.

Petroleum resins are commercially available with softening points ranging from 10 °C to 120 °C, preferably from 30 °C to 100 °C. Suitable petroleum resins include both aromatic and nonaromatic types. Several types of petroleum resins are available. Some resins have a low degree of unsaturation and high aromatic content, whereas some are highly unsaturated and yet some contain no aromatic structure at all. Differences in the resins are largely due to the olefins in the feedstock from which the resins are derived. Conventional derivatives in such resins include dicyclopentadiene, cyclopentadiene, their dimers and diolefins such as isoprene and piperylene. In one embodiment, the hydrocarbon resin is Oppera^{™} PR383 manufactured by Exxon Mobil, which is a hydrogenated C9 modified dicyclopentadiene having a T_{g} of 54 °C.

In one embodiment, terpene resins can be used as the hydrocarbon resin. Terpene polymers (or resins) may be typically commercially produced from polymerizing alpha or beta pinenes. In particular, alpha pinene based resins may be used. Terpene resins may be supplied in a variety of melting points ranging from 10 °C to 135 °C. The terpene resins may for example have a molecular weight M_{w} of less than 1000 g/mol, preferably less than 950 g/mol or ranging between 200 g/mol and 950 g/mol, as measured by gel permeation chromatography (GPC). An example of an alpha pinene based resin is Dercolyte^{™} A 115 of the company DRT which has a molecular weight M_{w} of 900 g/mol.

In one embodiment, the hydrocarbon resin is derived from styrene and alphamethylstyrene. The presence of the styrene/alphamethylstyrene resin with a rubber blend which contains the presence of the styrene-butadiene elastomer is considered herein to be beneficial because of observed viscoelastic properties of the tread rubber composition such as complex and storage modulus, loss modulus, tangent delta and loss compliance at different temperature/frequency/strain. The properties of complex and storage modulus, loss modulus, tangent delta and loss compliance are understood to be generally well known to those having skill in such art. The molecular weight distribution of the resin is visualized as a ratio of the resin's molecular weight average (Mw) to molecular weight number average (Mn) values and is considered herein to be in a range of 1.5/1 to 2.5/1 which is considered to be a relatively narrow range. This is believed to be advantageous because of the selective compatibility with the polymer matrix and because of a contemplated use of the tire in wet and dry conditions over a wide temperature range. The glass transition temperature Tg of the copolymer resin is considered herein to be in a range of 20 °C to 100 °C, alternatively 50 °C to 70 °C.

The measurement of T_{g} for resins is DSC according to ASTM D6604 or equivalent.

The styrene/alphamethylstyrene resin is considered herein to be a copolymer of styrene and alphamethylstyrene with a styrene/alphamethylstyrene molar ratio in a range of 0.40 to 1.50. In one aspect, such a resin can be suitably prepared, for example, by cationic copolymerization of styrene and alphamethylstyrene in a hydrocarbon solvent. Thus, the contemplated styrene/alphamethylstyrene resin can be characterized, for example, by its chemical structure, namely, its styrene and alphamethylstyrene contents and softening point and also, if desired, by its glass transition temperature, molecular weight and molecular weight distribution. In one embodiment, the styrene/alphamethylstyrene resin is composed of 40 to 70 percent units derived from styrene and, correspondingly, 60 to 30 percent units derived from alphamethylstyrene. In one embodiment, the styrene/alphamethylstyrene resin has a softening point according to ASTM No. E-28 in a range of 80 °C to 145 °C. Suitable styrene/alphamethylstyrene resin is available commercially as Resin 2336 from Eastman or Sylvares SA85 from Arizona Chemical.

The rubber compositions described herein may be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may for instance be used in an amount ranging from 0.5 phr to 8 phr, alternatively with a range of from 1 phr to 3 phr. Typical amounts of antioxidants, if used, may for example comprise 1 phr to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants, if used, may for instance comprise 1 phr to 5 phr. Typical amounts of fatty acids, if used, which can include stearic acid, may for instance comprise 0.5 phr to 3 phr. Typical amounts of waxes, if used, may for example comprise 1 phr to 5 phr. Often microcrystalline waxes are used. Typical amounts of peptizers, if used, may for instance comprise 0.1 phr to 1 phr. Typical peptizers may be, for example, pentachlorothiophenol and dibenzamidodiphenyl disulfide.

In certain embodiments, accelerators can be used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 phr to 4 phr, alternatively 0.8 phr to 1.5 phr. In another embodiment, combinations of a primary and a secondary accelerator might be used with the secondary accelerator being used in smaller amounts, such as from 0.05 phr to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are for instance amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be for instance a guanidine, dithiocarbamate or thiuram compound. Suitable guanidines include dipheynylguanidine and the like. Suitable thiurams include tetramethylthiuram disulfide, tetraethylthiuram disulfide, and tetrabenzylthiuram disulfide.

In one embodiment, the uncured rubber composition can include an oil. In one embodiment, when an oil is used, the weight ratio of the plasticizer to the oil is greater than 1. In another embodiment, the weight ratio of the plasticizer to the oil is greater than 1 to 5:1. In another embodiment, the uncured rubber composition does not include an oil.

Examples of such oils include aromatic, paraffinic, naphthenic, and low PCA oils, such as MES, TDAE, SRAE and heavy naphthenic oils. PCA oils may include those having a polycyclic aromatic content of less than 3 percent by weight as determined by the IP346 method. The oil may be a vegetable oil or vegetable oil derivate (such as sunflower oil, soybean oil or canola oil) or a blend of multiple oils, in particular sunflower oils. Some representative examples of vegetable oils that can be used include soybean oil, sunflower oil, canola (rapeseed) oil, corn oil, coconut oil, cottonseed oil, olive oil, palm oil, peanut oil, and safflower oil.

The preparation of the uncured rubber compositions described herein can be accomplished by methods generally used in the rubber mixing art. For example, the ingredients may be typically mixed in at least two stages, namely, at least one non-productive stage followed by a productive mix stage. The final curatives including sulfur-vulcanizing agents may be typically mixed in the final stage which is conventionally called the "productive" mix stage in which the mixing typically occurs at a temperature, or ultimate temperature, lower than the mix temperature(s) of the preceding non-productive mix stage(s). The terms "non-productive" and "productive" mix stages are well known to those having skill in the rubber mixing art. In one embodiment, the rubber composition may be subjected to a thermomechanical mixing step. The thermomechanical mixing step generally includes a mechanical working in a mixer or extruder for a period of time, for example suitable to produce a rubber temperature between 140 °C and 190 °C. The appropriate duration of the thermomechanical working varies as a function of the operating conditions, and the volume and nature of the components. For example, the thermomechanical working may be from 1 to 20 minutes.

After the uncured rubber composition has been prepared, it is vulcanized to produce a vulcanized rubber composition. In one embodiment, vulcanization can be carried out at temperatures ranging from 100 °C to 200 °C or 110 °C to 180 °C. Vulcanization processes can include heating in a press or mold or heating with superheated steam or hot air. The vulcanized rubber composition can be built, shaped, or molded into any desired shape or article.

In one embodiment, the vulcanized rubber composition is a component of a tire such as, for example, a tread, base, sidewall, or any combination thereof. In one embodiment, the tire may be a radial tire, a pneumatic tire, a non-pneumatic tire, a truck tire and a passenger car tire. The tire may for instance be a winter tire and/or may have a three peak mountain snowflake symbol. Thus, the tire may have a plurality of tread blocks having a plurality of sipes.

The vulcanized rubber compositions described herein possess numerous physical properties that make them suitable for use in all-season and winter season tires. For example, the vulcanized rubber compositions described herein have improved tread wear resistance, rolling resistance, snow performance, chip and flake resistance, and dry performance without compromising any of these properties.

Preferably, the vulcanized rubber composition has an abrasion DIN (rating) of at least 120 compared to reference C1 as provided in Table 1 in the Examples, preferably 125 to 140, as determined by DIN 53516.

Preferably, the vulcanized rubber composition has a tan delta value at 100 °C less than 0.16, preferably 0.12 to 0.14 as determined by ASTM D5289.

Preferably, the vulcanized rubber composition has a storage modulus at -40 °C less than 120 MPa, preferably 75 to 114, as determined by ISO 6721.

Preferably, the vulcanized rubber composition has a tensile strength of at least 17 MPa, preferably 18 to 21 MPa, as determined by ASTM D412/DIN 53504.

Preferably, +the vulcanized rubber composition has a Shore A at 23 °C of at least 64, preferably 64 to 69.

### ASPECTS

The present invention can be described in accordance with the following numbered Aspects, which should not be confused with the claims.

Aspect 1. An uncured rubber composition comprising:
40 phr to 70 phr of a styrene butadiene elastomer;
25 phr to 55 phr of a polybutadiene elastomer;
70 phr to 110 phr silica; and
25 phr to 55 phr of a plasticizer

Aspect 2. The uncured rubber composition of Aspect 1, wherein the styrene butadiene elastomer comprises 5 percent to 15 percent bound styrene and a 30 percent to 40 percent vinyl content based upon the total styrene butadiene elastomer, and wherein the styrene butadiene elastomer has a T_{g} of -55 °C to -65 °C.

Aspect 3. The uncured rubber composition of Aspect 1 or 2, wherein the polybutadiene elastomer is cis 1,4-polybutadiene elastomer having a T_{g} of -100 °C to -110 °C.

Aspect 4. The uncured rubber composition of any one of Aspects 1-3, wherein the polybutadiene elastomer is 35 phr to 50 phr.

Aspect 5. The uncured rubber composition of any one of Aspects 1-4, wherein the weight ratio of the styrene butadiene elastomer to the polybutadiene elastomer is 1:1 to 1.5:1.

Aspect 6. The uncured rubber composition of any one of Aspects 1-5, wherein the styrene butadiene elastomer is 50 phr to 60 phr and the polybutadiene elastomer is 40 phr to 50 phr.

Aspect 7. The uncured rubber composition of any one of Aspects 1-6, wherein the silica has a BET surface area of 150 m²/g to 165 m²/g.

Aspect 8. The uncured rubber composition of any one of Aspects 1-6, wherein the silica is 85 phr to 100 phr.

Aspect 9. The uncured rubber composition of any one of Aspects 1-8, wherein the plasticizer comprises a hydrocarbon resin.

Aspect 10. The uncured rubber composition of any one of Aspects 1-8, wherein the plasticizer comprises a hydrogenated dicyclopentadiene having a T_{g} of 50 °C to 60 °C.

Aspect 11. The uncured rubber composition of Aspect 1, wherein the composition comprises:
50 phr to 60 phr of a styrene butadiene elastomer;
40 phr to 50 phr of a polybutadiene elastomer;
85 phr to 100 phr silica; and
35 phr to 40 phr of a hydrocarbon resin.

Aspect 12. The uncured rubber composition of Aspect 11, wherein the weight ratio of the styrene butadiene elastomer to the polybutadiene elastomer is 1:1 to 1.5:1.

Aspect 13. The uncured rubber composition of Aspect 11 or 12, wherein the plasticizer comprises a hydrogenated dicyclopentadiene having a T_{g} of 50 °C to 60 °C.

Aspect 14. The uncured rubber composition of any one of Aspects 11-13, wherein the polybutadiene elastomer is cis 1,4-polybutadiene elastomer having a T_{g} of -100 °C to -110 °C.

Aspect 15. The uncured rubber composition of any one of Aspects 11-14, wherein the styrene butadiene elastomer comprises 5 percent to 15 percent bound styrene and a 30 percent to 40 percent vinyl content based upon the total styrene butadiene elastomer, and wherein the styrene butadiene elastomer has a T_{g} of -55 °C to -65 °C.

Aspect 16. The uncured rubber composition of any one of Aspects 11-15, wherein the silica has a BET surface area of 150 m²/g to 165 m²/g.

Aspect 17. The uncured rubber composition of any one of Aspects 11-16, wherein the composition does not include an oil.

Aspect 18. The uncured rubber composition of any one of Aspects 11-17, wherein the styrene butadiene elastomer is not functionalized with a hydroxyl group, an amino group, or a thiol group.

Aspect 19. A vulcanized rubber composition comprising the uncured composition of Aspect 1 that has been vulcanized.

Aspect 20. The vulcanized rubber composition of Aspect 19, wherein the composition has an abrasion DIN (rating) of at least 120 when compared to reference C1 in Table 1 as determined by DIN 53516.

Aspect 21. The vulcanized rubber composition of Aspect 19, wherein the composition has a tan delta value at 100 °C less than 0.16 as determined by ASTM D5289.

Aspect 22. The vulcanized rubber composition of Aspect 19, wherein the composition has a storage modulus at -40 °C less than 120 MPa as determined by ISO 6721.

Aspect 23. The vulcanized rubber composition of Aspect 19, wherein the composition has a tensile strength of at least 17 MPa as determined by ASTM D412/DIN 53504.

Aspect 24. The vulcanized rubber composition of Aspect 19, wherein the composition has a Shore A at 23 °C of at least 64.

Aspect 25. An article comprising the vulcanized rubber composition of Aspect 19.

Aspect 26. The article of Aspect 25, wherein the article comprises a tire or a component of a tire.

Now having described the aspects of the present invention, in general, the following Examples describe further details of the present invention.

### EXAMPLES

Rubber compounds were mixed according to the formulations shown in Table 1, with amounts given in phr. The compounds were cured and tested for physical properties.

**Table 1**

| **Formulation (in phr)** | | **C1** | **11** | **I2** | **13** | **I4** | **I5** | **I6** |
|---|---|---|---|---|---|---|---|---|
| SSBR^{a} | | 65 | 65 | 60 | 55 | 55 | 60 | 60 |
| PBR^{b} | | 15 | 35 | 40 | 45 | 45 | 40 | 40 |
| NR^{c} | | 20 | | | | | | |
| Silica | Silica 1^{d} | 125 | 100 | 100 | 100 | | 100 | 100 |
| | Silica 2^{e} | | | | | 90 | | |

| Resin | Resin 1^{f} | 35 | | | | | | |
|---|---|---|---|---|---|---|---|---|
| | Resin 2^{g} | | 33.5 | 35.25 | 37 | 37 | 35.25 | 41.25 |
| Oil^{h} | | 14.5 | 0 | 0 | 0 | 0 | 0 | 0 |
| Antidegradantsⁱ | | 3 | 3 | 3 | 3 | 3 | 3 | 3 |
| Waxes | | 1.5 | 1.5 | 1.5 | 1.5 | 1.5 | 1.5 | 1.5 |
| Sulfur | | 1.1 | 1.2 | 1.2 | 1.2 | 1.2 | 1.2 | 1.2 |
| Silane^{j} | | 7.8 | 6.3 | 6.3 | 6.3 | 8 | 6.3 | 6.3 |
| Accelerators^{k} | | 5.05 | 4.7 | 4.7 | 4.7 | 5 | 4.7 | 4.7 |
| Stearic Acid | | 5 | 2 | 2 | 2 | 2 | 2 | 2 |
| Zinc Oxide | | 2.5 | 2.5 | 2.5 | 2.5 | 2.5 | 2.5 | 2.5 |

| | | | | | | | | |
|---|---|---|---|---|---|---|---|---|
| a Solution-polymerized styrene butadiene rubber having a Tg of - 60°C b Cis-1,4 polybutadiene rubber as BudeneTM 1223 from the Goodyear Tire and Rubber Company, having a Tg of -108°C c Natural rubber d Precipitated silica with a surface area of 130 m²/g e Precipitated silica with a surface area of 160 m²/g f Copolymer of styrene and alpha-methylstyrene, T_{g} = 39 °C, obtained as Sylvatraxx4401 from Arizona Chemicals g Oppera 383 hydrogenated cyclopentadiene, T_{g} = 55 °C from Exxon Mobil h Sunflower oil, with a Tg of -80 °C i Mixed p-phenylene diamine type j SI266TM coupling agent from Evonik Industries k Sulfenamide and guanidine types | | | | | | | | |

Table 2 discloses mechanical test results for the control composition C1 and the inventive examples I1-I6 disclosed in Table 1. Tangent delta values at 100 °C have significantly decreased when comparing the inventive examples I1-I6 with C1, which can also be considered as an indicator for improved hysteresis behavior and thus less rolling resistance for the inventive examples. Significant improvements were observed in the abrasion test results, where I1-I6 had substantially higher DIN ratings when compared to C1. The shore A of I1-I6 also increased significantly when compared to C1, which is indicative of improved treadwear resistance and dry performance. The storage modulus E' shows also remarkable improvements at low temperature (-40 °C), which can be considered as a predictor for improved snow performance (wherein small values of E' are desirable for that property). Finally, the tensile strength exhibits significant improvements - to be linked to better chip and flake resistance. In summary, compared to C1, the inventive examples I1-I6 possess good treadwear performance while improving significantly rolling resistance snow performance, and chip and flake resistance.

**Table 2**

| | **C1** | **I1** | **I2** | **13** | **I4** | **I5** | **I6** |
|---|---|---|---|---|---|---|---|
| Abrasion DIN rating^{a} | 100 | 127 | 132 | 134 | 140 | 132 | 133 |
| Shore A at 23 °C^{b} | 62 | 68 | 67 | 67 | 69 | 67 | 64 |
| Tan Delta at 100 °C^{c} | 0.17 | 0.13 | 0.13 | 0.13 | 0.12 | 0.13 | 0.13 |
| E' at -40°C (MPa)^{d} | 136 | 112 | 99 | 90 | 94 | 99 | 114 |
| Tensile strength (MPa)^{e} | 16 | 19 | 18 | 19 | 19 | 18 | 18 |

| | | | | | | | |
|---|---|---|---|---|---|---|---|
| a Rotary drum abrasion test according to DIN 53516, results 10 are normalized to the control sample. b Test of durometer hardness is used to determine the indentation hardness of homogenous materials ranging from soft vulcanized rubber to hard apex compound. Type A is used for measuring softer material based on ASTM D2240 c Data obtained with an RPA 2000^{™} Rubber Process Analyzer of Alpha Technologies based on ASTM D5289. d Test of dynamic mechanical properties at forced sinusoidal tension including storage modulus E', according to ISO 6721. e Ring sample test based on ASTM D412 / DIN 53504, percentages are percentages of elongation, respectively strain; tensile strength is stress at break. | | | | | | | |

## Claims

1. An uncured rubber composition comprising:
40 phr to 70 phr of a styrene butadiene elastomer;
25 phr to 55 phr of a polybutadiene elastomer;
70 phr to 110 phr silica; and
25 phr to 55 phr of a plasticizer.

2. The uncured rubber composition of claim 1, wherein the styrene butadiene elastomer comprises 5 percent to 15 percent bound styrene and a 30 percent to 40 percent vinyl content based upon the total styrene butadiene elastomer.

3. The uncured rubber composition of claim 1 or 2, wherein the styrene butadiene elastomer has a T_{g} of from -55 °C to -65 °C.

4. The uncured rubber composition of least one of the previous claims, wherein the polybutadiene elastomer is cis 1,4-polybutadiene elastomer having a T_{g} of -100 °C to -110 °C.

5. The uncured rubber composition of at least one of the previous claims, wherein the amount of polybutadiene elastomer is from 35 phr to 50 phr.

6. The uncured rubber composition of at least one of the previous claims, wherein the weight ratio of the styrene butadiene elastomer to the polybutadiene elastomer is from 1:1 to 1.5:1.

7. The uncured rubber composition of at least one of the previous claims, wherein the amount of styrene butadiene elastomer is from 50 phr to 60 phr and the amount of polybutadiene elastomer is from 40 phr to 50 phr.

8. The uncured rubber composition of at least one of the previous claims, wherein the silica has a BET surface area of 150 m²/g to 165 m²/g.

9. The uncured rubber composition of at least one of the previous claims, wherein the amount of silica is from 85 phr to 100 phr.

10. The uncured rubber composition of at least one of the previous claims, wherein the plasticizer comprises a hydrocarbon resin or wherein the plasticizer comprises a

11. hydrogenated dicyclopentadiene preferably having a T_{g} of from 50 °C to 60 °C.

12. The uncured rubber composition of at least one of the previous claims, wherein the composition comprises 50 phr to 60 phr of a styrene butadiene elastomer; 40 phr to 50 phr of a polybutadiene elastomer; 85 phr to 100 phr silica; and 35 phr to 40 phr of a hydrocarbon resin as plasticizer.

13. The uncured rubber composition of at least one of the previous claims, wherein the composition is free of an oil.

14. A vulcanized rubber composition comprising the uncured composition of at least one of the previous claims that has been vulcanized.

15. An article comprising the vulcanized rubber composition of claim 13.

16. The article of claim 14, wherein the article is a tire or a component of a tire.
